# EUROPÄISCHE PATENTSCHRIFT

(11) **EP 3 938 673 B1**
(45) Veröffentlichungstag und Bekanntmachung des Hinweises auf die Patenterteilung: **27.12.2023**
(21) Anmeldenummer: 19828187.5
(22) Anmeldetag: 26.11.2019
(51) Int. Cl.: F16D 13/64

(54) **REIBBAUGRUPPE**
FRICTION ASSEMBLY
ASSEMBLAGE DE FRICTION

(30) Priorität: 13.03.2019 AT 502192019
(43) Veröffentlichungstag der Anmeldung: 19.01.2022
(73) Patentinhaber: Miba Frictec GmbH, 4663 Laakirchen (AT)
(72) Erfinder: MÜHLEGGER, Markus, 4812 Pinsdorf (AT); NICKEL, Falk, 4810 Gmunden (AT)
(74) Vertreter: Burger, Hannes
(86) Internationale Anmeldenummer: PCT/AT2019/060399
(87) Internationale Veröffentlichungsnummer: WO 2020/181305

(56) Entgegenhaltungen:
- WO-A1-2018/045405
- WO-A1-2018/131287
- WO-A1-2019/204844
- WO-A2-2012/094691
- DE-U1-202018 002 101
- US-A- 5 094 331

## Beschreibung

Die Erfindung betrifft eine Reibbaugruppe umfassend ein trockenlaufendes Lamellenpaket mit zumindest einer Belaglamelle und zumindest einer Gegenlamelle, die in einer Axialrichtung des Lamellenpakets abwechselnd hintereinander angeordnet und die in Reibschluss miteinander verbringbar sind, wobei die Belaglamelle zumindest einen Trockenlaufreibbelag aufweist. Weiter betrifft die Erfindung die Verwendung der Reibbaugruppe.

In herkömmlichen, trocken laufenden Antriebssystemen von Kraftfahrzeugen werden überwiegend organisch harzgebundene Reibbeläge eingesetzt.

Beispielsweise beschreibt die DE 29 24 540 A ein Produkt zur Herstellung von Bauelementen mit metallischer Zusammensetzung, das durch mindestens ein feines Stahlfaserpulver von einer losen Dichte zwischen 0,2 und 1,5 g/cm3, dessen Gehalt an Kohlenstoff zwischen 0,95 und 1,10 Gew.-% beträgt und dessen Gehalt an Chrom zwischen 1,3 und 1,6 Gew.-% liegt, gebildet ist, das so wärmebehandelt ist, dass die mikroskopische Struktur, gesehen von einer Prüfungsebene welche ein Metallteilchen schneidet, eine feine Verteilung kugeliger Eisen- und Chromcarbide von der Formel (FeCr)3C in einer gemischten Grundmasse aus Martensit von hoher Festigkeit und verformbarem Austenit erkennen lässt. Dieses fasrige Pulver wird für einen Reibbelag für Bremsen in einem Anteil von 30 bis 85 Gew.-% verwendet und enthält dieser Reibbelag zusätzlich noch mineralische und organische Füllstoffe. Insbesondere werden damit Reibbeläge von Kupplungen oder Bremsen hergestellt. Die Reibbeläge enthalten zwischen 10 und 20 % polymerisierbares Phenolbindemittel.

Moderne Antriebsstränge sollen bei immer geringerem Gewicht höhere Leistungen übertragen können, wobei gleichzeitig der Fahrkomfort und die Treibstoff-Effizienz gesteigert werden sollen. Durch die Forderung das Fahrzeuggewicht möglichst gering zu halten wird auch die Baugröße von Kupplungen stark beschränkt. Dies wiederum wirkt sich auf die Belastungen des Reibbelages stark aus, denn geringer Bauraum für die Kupplung bedeutet kleinere Belagflächen, was in höheren Energie- und Temperaturbelastungen des Reibmaterials resultiert.

Metallische Reibbeläge sind energetisch und thermisch höher belastbar, haben hohe Reibwerte und geringen Abrieb, neigen aber auch sehr stark zu Reibschwingungen, die den ganzen Antriebsstrang erfassen können und sich somit sehr negativ auf den Fahrkomfort des Fahrzeuges auswirken.

Der Stand der Technik beschreibt weiters Reibbauteile, bei denen der Reibbelag durch Sinterwerkstoffe gebildet ist. So beschreibt zum Beispiel die DE 44 43 666 A einen Bauteil, insbesondere einen Synchronring, mit Reibflächen zur Reibsynchronisation in Kfz-Schaltgetrieben. Der in dieser DE-A beschriebene Reibflächen-Werkstoff des Bauteils ist eine oberflächlich weitgehend porenfreie Sinterbronze mit das Reibverhalten, die Verschleißfestigkeit und den Schaltkomfort steigernden metallischen und nichtmetallischen Zusätzen in Form von bis zu 6 Gew.-% Zink, bis zu 6 Gew.-% Nickel, bis zu 3 Gew.-% Molybdän, 1 bis 6 Gew.-% SiO₂ und/oder Al₂O₃, wahlweise 0,2 bis 6 Gew.-% Graphit und/oder Molybdändisulfid, wobei den Rest die Bronze bildet bei definierter Teilchengröße im Ausgangspulver. Diese Sinterbronze ist für ölgeschmierte Teile zur Reibsynchronisation im Kfz-Schaltgetrieben vorgesehen.

Die EP 2 012 038 A2 offenbart eine Reibbaugruppe umfassend ein trockenlaufendes Lamellenpaket mit zumindest einer Belaglamelle und zumindest einer Gegenlamelle nach dem Oberbegriff von Anspruch 1.

Aufgabe der Erfindung ist es, eine Reibbaugruppe für den Trockenlauf zur Verfügung zu stellen, insbesondere für AWD- oder FWD-Antriebe.

Die Aufgabe wird bei der eingangs genannten Reibbaugruppe dadurch gelöst, dass der Trockenlaufreibbelag ein massegepresster Reibbelag ist. Weiter wird die Aufgabe der Erfindung durch die Verwendung der Reibbaugruppe in einer Kupplung oder einer Bremse oder einem Synchronisationsgetriebe eines AWD-Antriebes oder FWD-Antriebes gelöst.

Von Vorteil ist dabei, dass durch den Entfall einer Schmierung das System vereinfacht werden kann, die Reibbaugruppe also eine Alternative zu herkömmlichen nasslaufenden Systemen im AWD- oder FWD-Bereich bildet. Dabei ist von Vorteil, dass praktisch keine Schleppmomente vorhanden sind, wie diese bei nasslaufenden Reibbaugruppen auftreten. Somit kann die Reibbaugruppe mit einer höheren Leistung zur Verfügung gestellt werden. Es ist weiter von Vorteil, dass die Reibbaugruppe trotz des Entfalls der Kühlung über ein Öl einer höheren thermischen Belastung ausgesetzt werden kann.

Eine weitere Verbesserung dieser Effekte kann erreich werden, wenn gemäß einer Ausführungsvariante der Reibbaugruppe der Reibbelag eine Presssinterreibbelag ist. Dabei ist der Presssinterreibbelag nach einer weitere Ausführungsvariante bevorzugt ein Sintermetallbelag oder ein, einen organischen Werkstoff aufweisender Presssinterreibbelag.

Es ist weiter bevorzugt, wenn der Reibbelag auf einer Trägerlamelle angeordnet ist, da über die Trägerlamelle eine rasche Wärmeabfuhr erreicht werden kann. Der Reibbelag kann dabei direkt mit der Trägerlamelle verbunden sein, oder gemäß einer anderen Ausführungsvariante der Reibbaugruppe über eine Verbindungsschicht mit der Trägerlamelle verbunden sein. Mithilfe der Verbindungsschicht ist es nicht nur möglich, den Reibbelag auf der Trägerlamelle zu befestigen, sondern können damit auch weitere Eigenschaften der Reiblamelle verändert und angepasst werden.

Weiter kann der Reibbelag ringförmig ausgebildet oder gemäß einer anderen Ausführungsvariante segmentiert sein. Die Segmentierung hat dabei den Vorteil, dass die Segmente beanstandet zueinander angeordnet werden können und die dadurch gebildeten Kanäle zur Durchströmung mit Luft genutzt werden können, womit die thermische Belastbarkeit der Reibbaugruppe ebenfalls verbessert werden kann.

Zur Beeinflussung der Reibleistung bzw. der thermischen Stabilität der Reibbaugruppe kann nach weiteren Ausführungsvarianten vorgesehen sein, dass eine Oberfläche des Reibbelags strukturiert und/oder mit einer Beschichtung versehen ist, und/oder dass eine Oberfläche der Gegenlamelle strukturiert und/oder mit einer Beschichtung versehen ist.

Nach einer weitere Ausführungsvariante der Reibbaugruppe kann der Reibbelag zumindest einen Abrasivstoff aufweisen, wobei der Anteil des Abrasivstoffes an dem Reibbelag maximal 5 Gew.-% beträgt. Durch die Begrenzung des Anteils auf maximal 5 Gew.-% können Reibschwingungen reduziert werden.

Es kann gemäß einer anderen Ausführungsvariante der Reibbaugruppe vorgesehen sein, dass der Reibbelag eine Porosität aufweist, die ausgewählt ist aus einem Bereich mit einer unteren Grenze von 15 % und einer oberen Grenze von 40 %. Aufgrund des offenporigen Gefüges kann ein Reibbelag mit den gewünschtem Reibwert einfach herzustellen, da geringer Pressdrücke während der Herstellung des Grünlings erforderlich sind. Zu dem kann auch die Sintertemperatur gesenkt werden, ebenfalls bedingt durch die hohe Porosität des Sinterkörpers, da eine dichte Versinterung nicht erforderlich ist. Zu dem erhält man durch die Porosität eine zusätzliche Dämpfung der Rupfschwingungen.

Der Reibbelag kann nach einer weiteren Ausführungsvariante der Reibbaugruppe eine metallische Matrix aufweisen, wobei der Anteil der metallischen Matrix am Reibbelag ausgewählt ist aus einem Bereich mit einer unteren Grenze von 60 Gew.-% und einer oberen Grenze von 90 Gew.-%. Durch diesen hohen Anteil kann die Wärmeabfuhr über die metallische Matrix von der Reibfläche weg verbessert werden, wodurch eine Überhitzung des Reibbelages auch bei einer Porosität besser vermieden werden kann.

Ein weitere Reduzierung des Reibschwingungsverhalten konnte gemäß einer Ausführungsvariant der Reibbaugruppe mit dem Einsatz von Trockenlaufreibbelägen erreicht werden, deren metallische Matrix aus zumindest einem Element aus einer Gruppe umfassend Kupfer, Eisen, Zinn, Zink oder Legierungen damit und Mischungen daraus gebildet ist.

Weiter kann der Reibbelag gemäß einer weiteren Ausführungsvariante der Reibbaugruppe zumindest einen vom Abrasivstoff verschiedenen Füllstoff aufweisen, dessen Anteil am Reibbelag ausgewählt ist aus einem Bereich mit einer unteren Grenze von 5 Gew.-% und einer oberen Grenze von 35 Gew.-%. Es kann damit das Reibschwingungsverhalten weiter reduziert werden.

Besonders bevorzugt ist der Füllstoff ein silikatischer Füllstoff, insbesondere gemäß einer Ausführungsvariante ausgewählt aus einer Gruppe umfassend Glimmer, Feldspat, Kieselgur oder Mischungen daraus. Insbesondere durch letztere Füllstoffe (und insbesondere im Zusammenspiel mit der genannten hohen Porosität) konnten trotz geringer Anteile an Abrasivstoffen hohe Reibwerte erreicht werden.

Der zumindest eine Abrasivstoff kann ausgewählt sein aus einer Gruppe umfassend, Mullit, Siliziumdioxid, Korund, Glas, Aluminiumoxid (Al₂O₃), sowie Mischungen daraus wobei durch diese speziellen Abrasivstoffe eine hohe Abrasivwirkung auch bei geringen Anteilen an Abrasivstoffen erzielt werden kann.

Es ist weiters möglich, dass nach einer Ausführungsvariante in dem Reibbelag zumindest ein Festschmierstoff enthalten ist, der ausgewählt ist aus einer Gruppe umfassend Graphit, insbesondere Naturgraphit bzw. synthetischer Primär- oder Sekundärgraphit, Koks sowie Mischungen daraus. Durch diese Festschmierstoffe kann (insbesondere auch bei einer hohen Porosität und einem geringen Anteil an Hart- bzw. Abrasivstoffen) ein hoher Verschleiß vermieden werden.

Von Vorteil ist dabei, wenn der zumindest eine Festschmierstoff in einem Anteil enthalten ist, ausgewählt aus einem Bereich mit einer unteren Grenze von 2 Gew.-% und einer oberen Grenze von 30 Gew.-%, wodurch wiederum entsprechend niedrige Verschleißwerte erreicht werden können.

Nach einer weiteren Ausführungsvariante der Erfindung kann vorgesehen sein, dass die Gegenlamelle im Lamellenkörper mehrere Durchbrüche aufweist. Die Durchbrüche dienen als Reservoir für den Verschleiß abrieb der trockenlaufenden Reibbaugruppe, wodurch die Verschleißrate deutlich reduziert werden kann.

Um dabei ein relativ großes Gesamtvolumen für den Abrieb zur Verfügung zu stellen, ohne die Gegenlamelle übermäßig zu schwächen, kann nach einer weiteren Ausführungsvariante der Erfindung vorgesehen sein, dass die Durchbrüche im Lamellenkörper der Gegenlamelle auf unterschiedlicher radialer Höhe angeordnet sind. Die Durchbrüche können damit kleiner bemessen werden, insbesondere da damit auch die Reservoirs näher an den Ort der Entstehung des Abriebs angeordnet werden können (verglichen mit Durchbrüchen, die auf gleicher radialer Höhe ausgebildet sind).

Nach einer anderen Ausführungsvariante dazu kann vorgesehen sein, dass die Durchbrüche mit kreisrunder Fläche ausgebildet sind, da sie damit einfacher herstellbar sind.

Aus voranstehend genannten Gründen ist dabei gemäß einer Ausführungsvariante bevorzugt vorgesehen, dass die kreisrunden Flächen jeweils einen Durchmesser aufweisen, der ausgewählt ist aus einem Bereich von 2 mm bis 10 mm. Es ist damit einfacher möglich, eine relativ hohe Anzahl an Durchbrüchen auf unterschiedlicher radialer Höhe anzuordnen. Dabei hat sich herausgestellt, dass Durchbrüche mit einem Durchmesser von kleiner 2 mm eine zu geringe Aufnahme von Verschleißabrieb zeigen. Andererseits sind Durchbrüche mit mehr als 10 mm Durchmesser bereits so groß, dass sie das Reibverhalten der Reibbaugruppe negativ beeinflussen können.

Nach einer weiteren Ausführungsvariante der Erfindung kann vorgesehen sein, dass die Durchbrüche als Langlöcher ausgebildet sind, die gemäß einer Ausführungsvariante dazu bevorzugt einen bogenförmigen Verlauf aufweisen. Es ist damit möglich, mit relativ schlanken Durchbrüchen die Effizienz der Abriebaufnahme zu verbessern, wobei mit der bogenförmigen Ausführung die Effizienz der Abriebaufnahme verbessert werden kann, insbesondere wenn die Ausbildung der Bögen in Drehrichtung der Gegenlamelle nach außen orientiert ist, da damit durch die Fliehkraft, die auf die Abriebpartikel einwirkt, der Eintrag in die Durchbrüche und gegebenenfalls der spätere Austrag aus den Durchbrüchen verbessert werden kann.

Aus dem gleichen Grund, allerdings mit geringfügig kleinerem Wirkungsgrad im Vergleich zu den Langlöchern, kann vorgesehen sein, dass die Durchbrüche in radialer zumindest teilweise übereinander angeordnet sind. Damit wird in radialer Richtung eine Art "Überlappung" der Durchbrüche erreicht, wenngleich diese voneinander getrennt sind.

Zur weiteren Verbesserung der voranstehend genannten Effekte kann nach weiteren Ausführungsvarianten der Erfindung vorgesehen sein, dass die Durchbrüche, die auf gleicher radialer Höhe angeordnet sind, jeweils um einen Winkel versetzt angeordnet sind, der ausgewählt ist aus einem Bereich von 20 ° bis 60°, und/oder dass die Durchbrüche, die auf unterschiedlicher radialer Höhe angeordnet sind, jeweils um einen Winkel versetzt angeordnet sind, der ausgewählt ist aus einem Bereich von 5 ° bis 25 °.

Zum besseren Verständnis der Erfindung wird diese anhand der nachfolgenden Figuren näher erläutert.

Es zeigen jeweils in vereinfachter, schematischer Darstellung:
- Fig. 1: einen Ausschnitt aus einem Lamellenpaket einer Reibbaugruppe;
- Fig. 2: eine Reiblamelle;
- Fig. 3: eine Gegenlamelle;
- Fig. 4: eine Darstellung der Reibwertgenauigkeit bei einem Reibbelag nach dem Stand der Technik;
- Fig. 5: eine Darstellung der Reibwertgenauigkeit mit einem in der Reibbaugruppe nach der Erfindung verwendeten Reibbelag;
- Fig. 6: eine erste Ausführungsvariante einer Gegenlamelle mit Durchbrüchen;
- Fig. 7: eine zweite Ausführungsvariante einer Gegenlamelle mit Durchbrüchen;
- Fig. 8: eine dritte Ausführungsvariante einer Gegenlamelle mit Durchbrüchen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche in dieser Beschreibung genannten Normen beziehen sich auf die zum Anmeldezeitpunkt gegenständlicher Anmeldung letztgültige Fassung, sofern nicht etwas anderes angegeben ist.

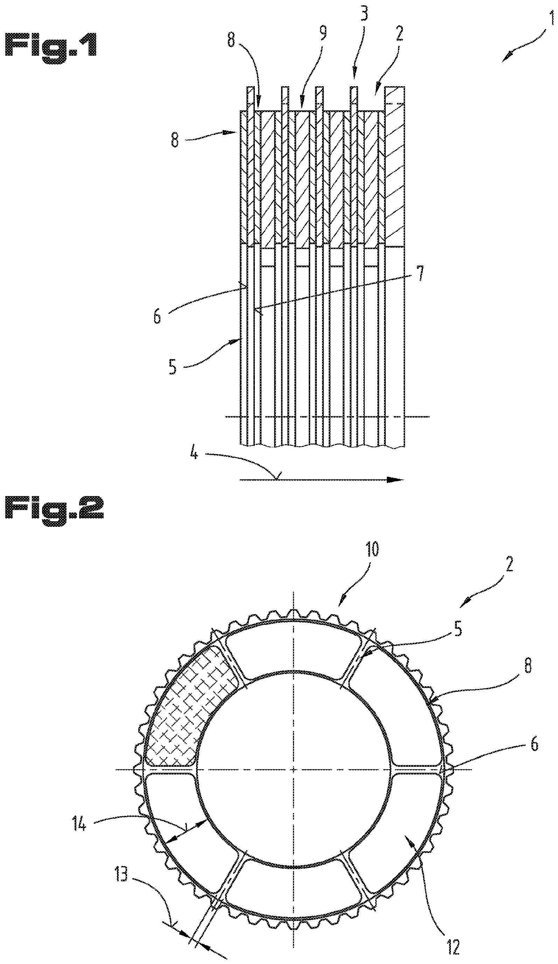

In Fig. 1 ist ein Ausschnitt aus einem Lamellenpaket 1 einer nicht weiter dargestellten Reibbaugruppe dargestellt. Das Lamellenpaket 1 weist zumindest eine BelagIamelle 2, insbesondere mehrere BelaglIamellen 2, und zumindest eine Gegenlamelle 3, insbesondere mehrere Gegenlamelle 3, auf, die auch als Reiblamellen bezeichnet werden können. Die Belaglamellen 2 sind in einer Axialrichtung 4 hintereinander abwechselnd mit den Gegenlamellen 3 angeordnet. Über einen entsprechenden Betätigungsmechanismus sind die Belaglamellen 2 relativ zu den Gegenlamellen 3 in der Axialrichtung 4 verstellbar, sodass zwischen den Belaglamellen 2 und den Gegenlamellen 3 ein Reibschluss ausgebildet wird.

In der Ausführungsvariante der Reibbaugruppe mit dem Lamellenpaket 1 nach Fig. 1 sind die Belaglamellen 2 als sogenannte Außenlamellen und die Gegenlamellen 3 als sogenannte Innenlamellen ausgeführt. Deren Ausbildung kann aber auch genau umgekehrt sein, dass also die Belaglamellen 2 die Innenlamellen und die Gegenlamellen 3 die Außenlamellen bilden.

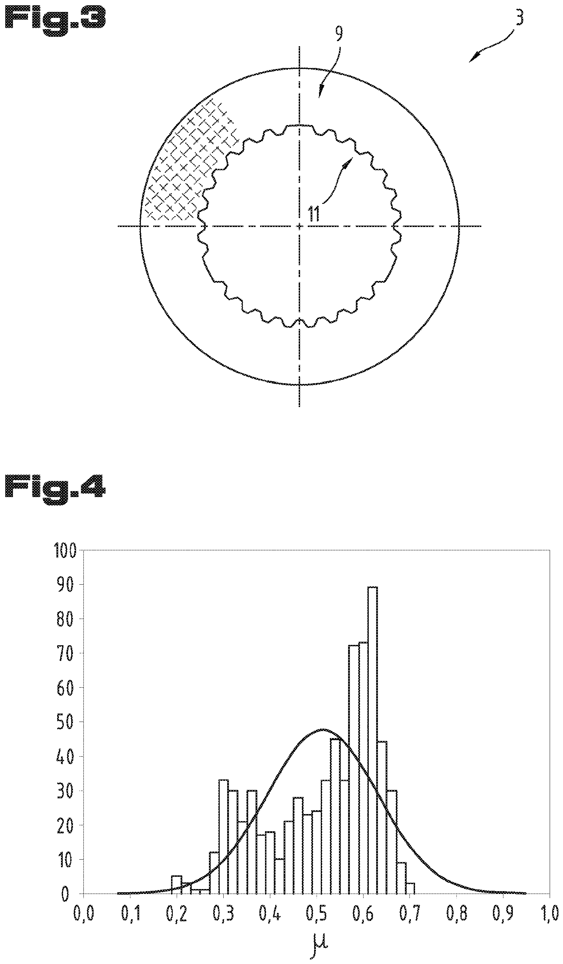

Die Belaglamelle 2 ist besser aus Fig. 2 und die Gegenlamelle 3 besser aus Fig. 3 zu ersehen. Da sämtliche Belaglamellen 2 und /oder sämtliche Gegenlamellen 3 eines Lamellenpakets 1 bzw. einer Reibbaugruppe bevorzugt gleich ausgebildet sind, wird im Folgendem nur mehr auf eine Belaglamelle 2 und eine Gegenlamelle 3 eingegangen. Diese Ausführungen können dementsprechend auf Belaglamellen 2 bzw. Gegenlamellen 3 angewandt werden. Die Anzahl der Belaglamellen 2 und der Gegenlamellen 3 kann generell beispielsweise jeweils ausgewählt sein aus einem Bereich von 1, insbesondere 2, bis 20. Die in Fig. 1 konkret dargestellte Anzahl an Belag- und Gegenlamellen 2, 3 ist also nicht beschränkend zu verstehen.

Die Belaglamellen 2 weist eine zumindest annährend ringförmige Trägerlamelle 5 mit einer ersten Oberfläche 6 und einer dieser in der Axialrichtung 4 gegenüberliegenden zweiten Oberfläche 7 auf. Auf der ersten und/oder der zweiten Oberfläche 6, 7 ist jeweils zumindest ein Reibbelag 8 angeordnet.

Die Gegenlamelle 3 weist einen zumindest annährend ringförmigen Lamellenkörper 9 auf, der allerdings frei von Reibbelägen ist.

Die Belaglamellen 2 weisen an einer radial äußeren Stirnfläche zumindest einen Mitnehmerelement 10, beispielsweise in Form einer Außenverzahnung, auf. Ebenso weisen die Gegenlamellen 3 an einer radial inneren Stirnfläche zumindest ein Mitnehmerelement 11 auf. Über die Mitnehmerelemente 10, 11 kann eine drehfeste Verbindung mit einem weiteren Bauteil der Reibbaugruppe, beispielsweise einer Welle im Fall der Gegenlamellen 2 oder dem Gehäuse der Reibbaugruppe im Fall der Belaglamellen 3, hergestellt werden, wie dies an sich bekannt ist. Es sei noch einmal darauf hingewiesen, dass die Lamellen umgekehrt ausgebildet sein können, also die Belaglamellen 2 die Mitnehmerelemente 11 und die Gegenlamellen 3 die Mitnehmerelemente 10 aufweisen können und dementsprechend auch die drehfeste Verbindung mit dem jeweils anderen Bauteil der Reibbaugruppe hergestellt sein kann.

Dieser prinzipielle Aufbau eines Lamellenpakets 1 ist aus dem Stand der Technik bekannt. Zu weiteren Einzelheiten dazu sei daher auf diesen einschlägigen Stand der Technik verwiesen.

Das Lamellenpaket 1 ist Teil eines trockenlaufenden Lamellenreibsystems, insbesondere einer trockenlaufenden Lamellenkupplung, einer Bremse, einer Haltebremse, einer Differenzialsperr, etc.. Bevorzugt wird das Lamellenpaket 1 in einer Reibbaugruppe eines AWD-Antriebes (All Wheel Drive) oder eines FWD-Antriebes (Front Wheel Drive) eingesetzt.

Der Reibbelag 8 ist ein massegepresster Trockenlaufreibbelag. Dazu kann aus den Bestandteilen des Reibbelags 8 ein Gemisch hergestellt werden, das in weiterer Folge zu einem Pressling in einer Presse, gegebenenfalls in einer Heißpresse bei erhöhter Temperatur (z.B. bei einer Temperatur zwischen 100 °C bis 190 °C), oder im kalten Zustand bei Raumtemperatur gepresst wird.

Gemäß einer Ausführungsvariante kann vorgesehen sein, dass der Reibbelag 8 eine Presssinterreibbelag ist. Der Presssinterreibbelag kann ein Sintermetallbelag wie er im Folgenden noch beschrieben wird, oder ein, einen organischen Werkstoff aufweisender Presssinterreibbelag sein. Es ist aber auch möglich, dass der Reibbelag 8 ein organischer Reibbelag 8 ist. Zu den Werkstoffen sei auf die nachfolgenden Ausführungen verwiesen.

Der Reibbelag 8 kann mittels eines Bandsinterprozess oder mittels Drucksintern oder durch einen DHP-Prozess (Direkt Hot Pressing) hergestellt sein.

Der Reibbelag 8 kann ein Schichtdicke zwischen 0,5 mm und 5 mm aufweisen.

Wie bereits ausgeführt, ist der Reibbelag 8 bevorzugt auf der Trägerlamelle 5 angeordnet. Die Trägerlamelle 5 besteht bevorzugt aus einem Stahl. Es sind aber auch andere eisenbasierte Legierungen einsetzbar. Ebenso können auch kupferbasierte Legierungen, wie z.B. Messing oder Bronze, oder andere metallische Legierungen einsetzbar.

Die Trägerlamelle 5 kann ein Dicke zwischen 0,4 mm und 5,5 mm aufweisen.

Der Reibbelag 8 kann direkt auf der Trägerlamelle 5 angeordnet sein, beispielsweise auf diesen aufgepresst und aufgesintert sein. Es besteht aber auch die Möglichkeit, dass der Reibbelag 8 mit dem Lamellenträger 5 über eine Verbindungsschicht verbunden ist, die zwischen dem Lamellenträger 5 und dem Reibbelag 8 angeordnet wird. Die Verbindungsschicht kann beispielsweise eine Lotschicht, z.B. ein Hartlot auf Basis einer CuSn- oder CuZn-Legierung, oder eine Kleberschicht, z.B. aus organischen und anorganischen Hochtemperaturkleber, sein.

Die Trägerlamelle 5 kann auf nur einer der Oberflächen 6, 7 oder auf beiden Oberflächen 6, 7 (wie dies in Fig. 1 gezeigt ist) zumindest einen Reibbelag 8 aufweisen.

Es ist weiter möglich, dass der Reibbelag 8 als geschlossener, einteiliger Ring ausgeführt sein, sich also ununterbrochen über 360 ° erstrecken. Nach einer anderen Ausführungsvariante kann aber auch vorgesehen sein, dass der Reibbelag 8 segmentiert ist, wie dies in Fig. 2 dargestellt ist. Dargestellt ist dabei ein Reibbelag 8 mit sechs Segmenten 12. Diese Anzahl ist aber nicht limitierend zu verstehen. Insbesondere kann der Reibbelag 8 zwischen zwei und dreißig Segmente 8 aufweisen. Ein Reibbauteil kann aber auch nur ein derartiges Segment 8, das nicht als geschlossener Ring ausgeführt ist, aufweisen. Ebenso sind andere Formen des Reibbelags, z.B. zylinderförmige, quaderförmige, etc., möglich.

Die Segmente 8 sind in Umfangsrichtung der Reiblamelle 8 beabstandet zueinander angeordnet. Dabei kann ein Abstand 13 zwischen 0 mm und 20 mm, insbesondere zwischen 1 mm und 15 mm, betragen.

Ecken und/oder Kanten der Segmente 12 können abgeschrägt oder gerundet ausgeführt sein. Der Rundungsradius kann dabei zwischen 0,5 mm und 6 mm, insbesondere zwischen 1 mm und 4,5 mm, betragen.

Eine radiale Breite 14 des Reibbelags 8 bzw. der Segmente 12 kann ausgewählt sein aus einem Bereich von 5 mm bis 40 mm.

Die durch die Beabstandung der Segmente 12 entstehenden Nuten zwischen den Segmenten 12 können einen rechteckförmigen, quadratischen, trapezförmigen, runden, etc. Querschnitt aufweisen.

Erfindungsgemäß besteht die Gegenlamelle 3 aus einem Stahl oder einer eisenbasierten Legierung.

Die Gegenlamelle 3 kann ein Dicke zwischen 0,5 mm und 6 mm aufweisen.

Der Außendurchmesser und der Innendurchmesser der Belaglamellen 2 und der Gegenlamellen 3 kann den entsprechenden Gegebenheiten angepasst sein. Gleiches gilt für das Verhältnis von Außendurchmesser zu Innendurchmesser.

Es kann nach einer anderen Ausführungsvariante weiter vorgesehen sein, dass die Oberfläche des Reibbelags 8 und/oder die Oberfläche der Gegenlamelle 3 und/oder die Oberfläche(n) 7, 8 strukturiert ausgeführt sind, wie dies in den Fig. 2 und 3 für die Oberfläche des Reibbelags 8 und die Oberfläche der Gegenlamelle 3 strichliert angedeutet ist. Die Strukturierung kann in Form von Nuten, beispielsweise Nuten mit konzentrischem oder radialem Verlauf, Nuten in Form eines trapezförmigen Musters, als Waffelnuten, etc. ausgeführt sein. Ebenso sind auch diskrete Erhöhungen in Form von Noppen oder dgl. als Oberflächenstrukturierung möglich. Die Oberfläche des Reibbelags 8 und/oder die Oberfläche der Gegenlamelle 3 und/oder die Oberfläche(n) 7, 8 können aber auch pressglatt ausgeführt sein. Zudem besteht die Möglichkeit einer Kombination aus (press)glatten und strukturierten Oberflächen.

Die Tiefe der Nuten der Oberflächenstrukturierung(en) kann ausgewählt sein aus einem Bereich von 0,1 mm bis 2 mm, insbesondere zwischen 0,5 mm und 1,5 mm. Die Breite der Nut (in Umfangsrichtung der Reiblamelle 8) kann ausgewählt sein aus einem Bereich von 1 mm bis 3 mm, insbesondere zwischen 1 mm und 2,5 mm. Die Nuten können einen rechteckförmigen, quadratischen, trapezförmigen, runden, etc. Querschnitt aufweisen. Alle Nuten eine Oberflächenstrukturierung können gleich ausgeführt sein. Es können aber auch unterschiedliche Nuten (Breite, Tiefe, Form) auf einer Oberfläche miteinander kombiniert werden. Gemäß einer weiteren Ausführungsvariante kann vorgesehen sein, dass die Oberfläche des Reibbelags 8 und/oder die Oberfläche der Gegenlamelle 3 mit einer Beschichtung versehen ist. Die Beschichtung kann aus aufgeschmolzenen Metalloxiden aus der Gruppe Al, Mg, Fe, Si oder Ti oder organische Beschichtungen mit Füllstoffen aus Al, Mg, Fe, Si, Ti oder Carbiden, hergestellt sein. Des weiteren kann die Beschichtung auch auf Basis von Cu oder Cu-Legierungen ausgeführt sein.

Erfindungsgemäß , weist der Reibbelag 8 eine Porosität auf, die größer als 10 % ist. Insbesondere kann der Reibbelag eine Porosität aufweisen, die ausgewählt ist aus einem Bereich mit einer unteren Grenze von 15 % und einer oberen Grenze von 40 %. Die Porosität bezeichnet dabei den relativen Anteil das Hohlraumvolumens am Gesamtvolumen des Reibbelags 8. Gemessen kann die Porosität werden nach mittels Hg-Intrusion und -Extrusion: Porenvolumen nach ISO 15901-1 (DIN 66133).

Zur weiteren Verbesserung der Eigenschaften des Reibbelags 8 kann die Porosität auch ausgewählt sein aus einem Bereich mit einer unteren Grenze von 20 % und einer oberen Grenze von 35 %, insbesondere ausgewählt sein aus einem Bereich mit einer unteren Grenze von 25 % und einer oberen Grenze von 30 %.

Der Reibbelag 8 kann aus zumindest einer metallischen Matrix, zumindest einem Abrasivstoff, zumindest einem Füllstoff und gegebenenfalls zumindest einem Festschmierstoff bestehen, wobei sich alle Bestandteile zu 100 Gew.-% ergänzen.

Der Reibbelag 8 kann bindemittelfrei ausgebildet sein und einen Reibbelagskörper aufweisen. Bindemittelfrei bedeutet, dass der Reibbelag 8 keine organischen Harze als Bindemittel aufweist. Der Reibbelagskörper weist in diesem Fall eine metallische Matrix, zumindest einem Abrasivstoff, Festschmierstoffe, und gegebenenfalls zumindest einem Füllstoff auf bzw. besteht daraus, wobei sich in letzterem Fall alle Bestandteile des Reibbelagskörpers auf 100 Gew.-% ergänzen.

Der Anteil der metallischen Matrix am Reibbelag 8 kann ausgewählt sein aus einem Bereich mit einer unteren Grenze von 60 Gew.-% und einer oberen Grenze von 90 Gew.-%. Der Anteil der metallischen Matrix kann weiter ausgewählt sein aus einem Bereich mit einer unteren Grenze von 70 Gew.-% und einer oberen Grenze von 80 Gew.-%.

Vorzugsweise wird für die metallische Matrix zumindest ein Metall oder eine Metalllegierung ausgewählt, das bzw. die eine Härte nach Vickers aufweist, die ausgewählt ist aus einem Bereich von einer unteren Grenze von 30 HV10 und einer oberen Grenze von 80 HV10. Durch Metalle dieser Härte ist es möglich, dass zumindest ein Teil der abrasiven Wirkung des Reibbelages durch die metallische Matrix erhalten wird, insbesondere wenn die metallische Matrix nicht durch Schleifen oder dergleichen nachbehandelt ist um die Oberfläche zu glätten.

Insbesondere kann für die metallische Matrix zumindest ein Metall oder eine Metalllegierung ausgewählt werden, das bzw. die eine Härte nach Vickers aufweist, die ausgewählt ist aus einem Bereich von einer unteren Grenze von 40 HV10 und einer oberen Grenze von 60 HV10.

Beispielsweise kann die metallische Matrix aus zumindest einem Element aus einer Gruppe umfassend Kupfer, Eisen, Zinn, Zink oder Legierungen damit und Mischungen daraus gebildet sein.

Bevorzugt beträgt der Anteil des Abrasivstoffes an dem Reibbelag 8 maximal 5 Gew.-%.

Der zumindest eine Abrasivstoff kann ausgewählt sein aus einer Gruppe umfassend, Mullit, Siliziumdioxid, Korund, Glas, Aluminiumoxid (Al₂O₃), sowie Mischungen daraus wobei durch diese Abrasivstoffe eine hohe Abrasivwirkung auch bei derartig geringen Anteilen an Abrasivstoffen erzielt werden kann.

Der Anteil des zumindest einen Füllstoffes am Reibbelag 8 kann ausgewählt sein aus einem Bereich von einer unteren Grenze von 5 Gew.-% und einer oberen Grenze von 35 Gew.-%. Besonders bevorzugt ist der Füllstoff ein silikatischer Füllstoff, insbesondere gemäß einer Ausführungsvariante ausgewählt aus einer Gruppe umfassend Glimmer, Feldspat, Kieselgur oder Mischungen daraus. Insbesondere durch letztere spezielle Füllstoffe im Zusammenspiel mit der hohen Porosität konnten trotz geringer Anteile an Abrasivstoffen hohe Reibwerte erreicht werden.

Das Verhältnis von Füllstoff(en) zu Abrasivstoff(en) kann ausgewählt sein aus einem Bereich mit einer unteren Grenze von 1: 1 und einer oberen Grenze von 5:1. Innerhalb dieser Grenzen konnte ein Maximum der Abrasivwirkung des erfindungsgemäßen Trockenlaufreibbelages bei geringem Abrasivstoffanteil beobachtet werden.

Der Reibbelag 8 weist eine erste und eine in der Axialrichtung 4 zweite dieser gegenüberliegenden Oberfläche auf wobei der Anteil des Abrasivstoffes von der ersten Oberfläche in Richtung auf die zweite Oberfläche zunehmen kann. Es ist damit eine Ausgestaltung mit höherem Anteil des Abrasivstoffes an der Reibfläche möglich. Andererseits ist es damit aber auch möglich, einen besseren Zusammenhalt des Reibbelages 8 mit einem Trägerlamelle 5 durch Ausbildung von Verzahnungen oder Mikroverschweißungen zu erhalten. Je nach gewünschter Eigenschaft kann also der erhöhte Anteil des zumindest einen Abrasivstoffes an einer Oberfläche ausgewählt werden.

Es ist weiters möglich, dass in der metallischen Matrix zumindest ein Festschmierstoff enthalten ist, der ausgewählt ist aus einer Gruppe umfassend Graphit, insbesondere Naturgraphit bzw. synthetischer Primär- oder Sekundärgraphit, Koks sowie Mischungen daraus. Von Vorteil ist dabei, wenn der zumindest eine Festschmierstoff in der metallischen Matrix in einem Anteil enthalten ist, ausgewählt aus einem Bereich mit einer unteren Grenze von 2 Gew.-% und einer oberen Grenze von 30 Gew.-%, wodurch wiederum entsprechend niedrige Verschleißwerte erreicht werden können. Insbesondere kann der Anteil des zumindest einen Festschmierstoffes am Reibbelag ausgewählt sein aus einem Bereich mit einer unteren Grenze von 3 Gew.-% und einer oberen Grenze von 15 Gew.-%, bzw. ausgewählt sein aus einem Bereich mit einer unteren Grenze von 4 Gew.-% und einer oberen Grenze von 7,5 Gew.-%.

Besonders bevorzugt ist, wenn das Verhältnis von Abrasivstoff zu Festschmierstoff ausgewählt ist aus einem Bereich mit einer unteren Grenze von 1 : 7 und einer oberen Grenze von 1 : 20. Durch dieses abgestimmte Verhältnis an Abrasivstoff zu Festschmierstoff konnten die Verschleißeigenschaften deutlich verbessert werden.

Vorzugsweise beträgt das Verhältnis von Abrasivstoff zu Festschmierstoff 1 : 10.

Gegebenenfalls kann der Reibbelag 8 ein organisches Bindemittel enthalten. Das organische Bindemittel kann ausgewählt sein aus einer Gruppe umfassend Phenolharze, gegebenenfalls vermischt mit einem Silikonharz, Polyvinylfluorid, Polyvinylidenfluorid, Polyesterimide, Polyimidharze, wie z.B. Carboranimide, aromatische Polyimidharze, wasserstofffreie Polyimidharze, Polytriazo-Pyromellithimide, Polyamidimide, insbesondere aromatische, Polyaryletherimide, gegebenenfalls modifiziert mit Isocyanaten, Polyetherimide, gegebenenfalls modifiziert mit Isocyanaten, Acrylharze, Epoxyharze, Epoxyharzester, Polyamid 6, Polyamid 66, Polyoxymethylen, Polyarylether, Polyarylketone, Polyaryletherketone, Polyaryletheretherketone, Polyetheretherketone, Polyetherketone, Polyethylensulfide, Allylensulfid, Polytriazo-Pyromellithimide, Polyesterimide, Polyarylsulfide, Polyvinylensulfide, Polyphenylensulfide, Polysulfone, Polyethersulfone, Polyarylsulfone, Polyaryloxide, Polyarylsulfide oder Copolymere davon sowie Mischungen daraus.

Im Folgenden sind einige Beispielzusammensetzungen des Reibbelags 8 angeführt, die jedoch keinen einschränkenden Charakter haben. Sämtliche Angaben zur Zusammensetzung sind Gew.-%.
Beispiel 1:
   60,0 % Kupfer, 10,0 % Eisen, 15,0 % Feldspat, 10,5 % synthetischer Graphit, 4,5 % Aluminiumoxid
Beispiel 2:
   60,0 % Kupfer, 2,0 % Zinn, 20,0 % Kieselgur, 12,0 % synthetischer Graphit, 2,0 % Naturgrafit, 4,0 % Korund
Beispiel 3:
   60,0 % Kupfer, 14,0 % Eisen, 8,0 % Glimmer, 10,5 % synthetischer Graphit, 3,0 % Naturgrafit, 4,5 % Aluminiumoxid
Beispiel 4:
   64,0 % Kupfer, 3,0 % Zink, 14,0 % Glimmer, 12,0 % synthetischer Graphit, 5,0 % Koks, 2,0 % Siliziumoxid
Beispiel 5:
   69,0 % Kupfer, 8,0 % Glimmer, 10,0 % Feldspat, 10,5 % synthetischer Graphit, 2,5 % Mullit
Beispiel 6:
   70,0 % Kupfer, 15,0 % Eisen, 5,0 % Koks, 4,0 % Naturgrafit, 4,5 % Molybdändisulfid, 1,5 % Siliziumoxid
Beispiel 7:
   75,0 % Kupfer, 8,0 % Kieselgur, 4,0 % Molybdändisulfid, 10,5 % synthetischer Graphit, 2,5 % Mullit
Beispiel 8:
   50,0 % Kupfer, 10,0 % Eisen, 10,0 % Kieselgur, 15,0 % Glimmer, 9,0 % synthetischer Graphit, 4,5 % Molybdändisulfid, 1,5 % Siliziumoxid
Beispiel 9:
   70,0 % Kupfer, 4,0 % Zinn, 8,0 % Kieselgur, 4,0 % Molybdändisulfid, 8,0 % synthetischer Graphit, 2,0 % Naturgrafit, 4,0 % Korund
Beispiel 10:
   40,0 % Kupfer, 25,0 % Eisen, 20,0 % Kieselgur, 11,5 % synthetischer Graphit, 3,5 % Aluminiumoxid

Es besteht weiter nach einer Ausführungsvariante der Erfindung die Möglichkeit, dass in der metallischen Matrix zumindest zwei unterschiedliche Festschmierstoff enthalten sind, die ausgewählt sind aus einer Gruppe bestehend aus hexagonalem Bornitrid und Metallsulfide mit zumindest einem Metall der Gruppe Wolfram, Eisen, Zinn, Kupfer, Bismut, Antimon, Chrom, Zink, Silber, Mangan, Molybdän. Insbesondere kann die Gruppe der Festschmierstoffe neben hexagonalem Bornitrid auch Sb₂S₃, Bi₂S₃, Cr₂S₃, Cu₂S, CuS, CuFeS₂, FeS, FeS₂, MnS, MoS₂, Ag₂S, WS₂, SnS, SnS₂, Sn₂S₃, ZnS. Es kann dabei vorgesehen sein, dass die Festschmierstoffe durch zumindest zwei Metallsulfide gebildet sind, die das gleiche Metall aufweisen, also beispielsweise durch SnS und SnS₂.

Zusätzlich zu diesen Festschmierstoffen kann noch Graphit, insbesondere Naturgraphit bzw. synthetischer Primär- oder Sekundärgraphit, Koks sowie Mischungen daraus enthalten sein.

Von Vorteil ist, wenn der Gesamtanteil an Festschmierstoff in der metallischen Matrix ausgewählt aus einem Bereich mit einer unteren Grenze von 5 Gew.-% und einer oberen Grenze von 30 Gew.-%. Insbesondere kann der Gesamtanteil der Festschmierstoffe am Reibbelag 8 ausgewählt sein aus einem Bereich mit einer unteren Grenze von 6 Gew.-% und einer oberen Grenze von 15 Gew.-%, bzw. ausgewählt sein aus einem Bereich mit einer unteren Grenze von 8 Gew.-% und einer oberen Grenze von 10 Gew.-%.

Zinnsulfide können in einem Gesamtanteil zwischen 2 Gew.-% und 7 Gew.-% enthalten sein.

Der Gesamtanteil an Eisensulfiden am Reibbelagskörper kann zwischen 1 Gew.-% und 5 Gew.-% betragen.

Der Gesamtanteil an hexagonalem Bornitrid am Reibbelagskörper kann zwischen 1 Gew.-% und 6 Gew.-% betragen. Sofern hexagonales Bornitrid und Grafit enthalten sind, kann das Mengenverhältnis von Grafit zu hexagonalem Bornitrid aus einem Bereich von 3 bis 6 ausgewählt sein.

Es kann auch vorgesehen sein, dass die Festschmierstoffe teilweise natürlichen Ursprungs und teilweise synthetisch hergestellt sind. Dabei ist von Vorteil, wenn ein Mengenverhältnis von natürlichem Festschmierstoff zu synthetischem Festschmierstoff ausgewählt ist aus einem Bereich von 1,5 bis 5. Generell kann der Mengenanteil an synthetischen Festschmierstoffen zwischen 0,5 Gew.-% und 5 Gew.-% betragen.

Die synthetischen Festschmierstoffe sind insbesondere auf Basis von Grafit und auf Basis von Metallsulfiden hergestellt bzw. synthetischer Grafit und synthetische Metallsulfide aus der voranstehend angeführten Gruppe an Metallen.

Im Folgenden sind einige bevorzugte Beispiele für derartige Festschmierstoffzusammensetzungen des Reibbelags 8 angeführt, die jedoch keinen einschränkenden Charakter haben. Sämtliche Angaben zur Zusammensetzung sind Gew.-%.
Beispiel a.)
   2 % bis 6 SnS + 1 % bis 5 % SnS₂, beispielsweise 4 % SnS + 3 % SnS₂
Beispiel b.)
   0,5 % bis 1,5 % SnS + 1 % und 3 % SnS₂ + 0,5-% und 3 % Sn2S3 + 3,5 % und 7,5 % hexagonales Bornitrid, beispielsweise 1 % SnS + 2 SnS₂ + 1,5 % Sn₂S₃ + 5,5 % hexagonales Bornitrid
Beispiel c.)
   6 % bis 10 % SnS + 2 % und 6 % FeS, beispielsweise 8 % SnS + 4 % FeS
Beispiel d.)
   1 % bis 5 % SnS + 2 % bis 6 % FeS + 0,5 % bis 1 % synthetischer Festschmierstoff auf Basis von Zinksulfid mit Wolframsulfid und mit Graphit, beispielsweise 3 % SnS + 4 % FeS + 0,75 % synthetischer Festschmierstoff
Beispiel e.)
   2 % bis 6 % SnS + 1 % bis 3,5 % FeS + 0,5 % bis 4 % hexagonales Bornitrid + 0,5 % bis 3 % synthetischer Festschmierstoff auf Basis von Zinksulfid mit Wolframsulfid und mit Graphit, beispielsweise 4 % SnS + 2,5 % FeS + 2 % hexagonales Bornitrid + 1,5 % synthetischer Festschmierstoff
Beispiel f.)
   4 % bis 8 % SnS + 2 % bis 6 % hexagonales Bornitrid + 10 % bis 17 % Grafit + 0,5 % bis 3 % synthetischer Festschmierstoff auf Basis von Zinksulfid mit Wolframsulfid und mit Graphit, beispielswiese 6 % SnS + 4 % hexagonales Bornitrid + 15 % Grafit + 2 % synthetischer Festschmierstoff.

Mit diesen Festschmierstoffzusammensetzungen wurden die folgenden Beispiele an Reibbelägen 8 hergestellt, die jedoch keinen einschränkenden Charakter haben. Sämtliche Angaben zur Zusammensetzung sind ebenfalls Gew.-% zu verstehen.
Beispiel 11:
   60,0 % Kupfer, 10,0 % Eisen, 15,0 % Feldspat, 1 % SnS + 2 SnS₂ + 1,5 % Sn₂S₃ + 5,5 % hexagonales Bornitrid, 5 % Aluminiumoxid
Beispiel 12:
   60,0 % Kupfer, 2,0 % Zinn, 20,0 % Kieselgur, 8 % SnS + 4 % FeS, 2,0 % Naturgrafit, 4,0 % Korund
Beispiel 13:
   60,0 % Kupfer, 14,0 % Eisen, 8,0 % Glimmer, 1 % SnS + 2 SnS₂ + 1,5 % Sn₂S₃ + 5,5 % hexagonales Bornitrid, 3,5 % Naturgrafit, 4,5 % Aluminiumoxid
Beispiel 14:
   64,0 % Kupfer, 3,0 % Zink, 4,0 % Glimmer, 6 % SnS + 4 % hexagonales Bornitrid + 15 % Grafit + 2 % synthetischer Festschmierstoff, 2,0 % Siliziumoxid
Beispiel 15:
   70,0 % Kupfer, 8,0 % Glimmer, 10,0 % Feldspat, 4 % SnS + 3 % SnS₂, 5 % Mullit
Beispiel 16:
   70,0 % Kupfer, 15,0 % Eisen, 4 % SnS + 2,5 % FeS + 2 % hexagonales Bornitrid + 1,5 % synthetischer Festschmierstoff, 5 % Siliziumoxid
Beispiel 17:
   90,0 % Kupfer, 3 % SnS + 4 % FeS + 0,75 % synthetischer Festschmierstoff, 2,25 % Mullit
Beispiel 18:
   50,0 % Kupfer, 9,0 % Eisen, 10,0 % Kieselgur, 15,0 % Glimmer, 4 % SnS + 2,5 % FeS + 2 % hexagonales Bornitrid + 1,5 % synthetischer Festschmierstoff, 6 % Siliziumoxid

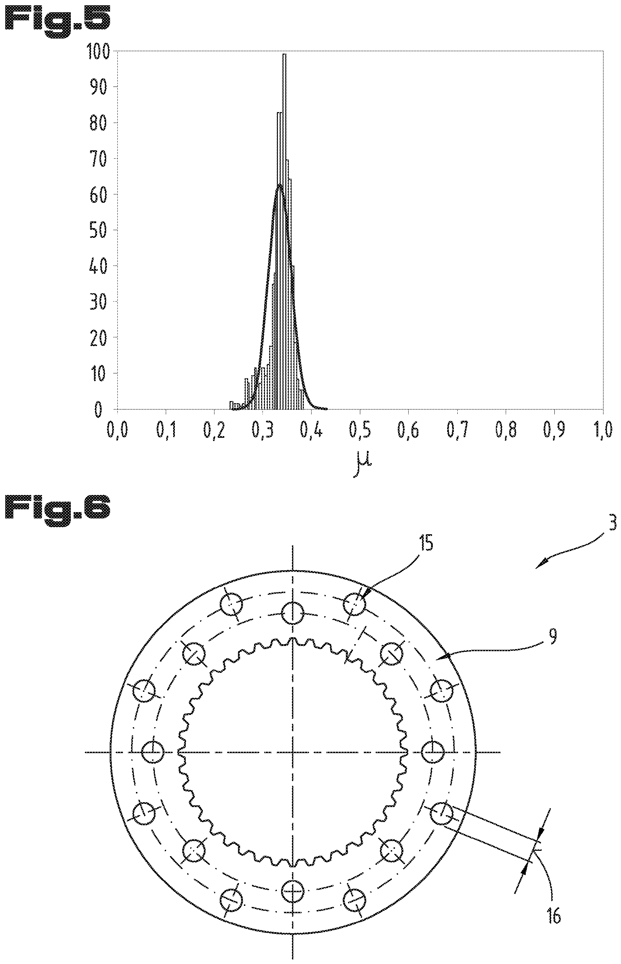

Im Zuge der Validierung der Erfindung wurde unter anderem auch die Reibwertgenauigkeit der beschriebenen Reibbeläge 8 mit mehr als zwei Festschmierstoffen in der Matrix ermittelt. In Fig. 4 ist dazu die Verteilung der Reibwerte für Reibbeläge entsprechend der EP 2 012 038 A2 und in Fig. 5 die Verteilung der Reibwerte für Reibbeläge 8 nach der Erfindung. Dabei sind jeweils auf der Abszisse der Reibwert und auf der Ordinate die Häufigkeit aufgetragen. Es wurden jeweils 708 Proben gemessen.

Wie aus dem Vergleich der beiden Figuren sofort ersichtlich ist, weisen die Reibbeläge 8 nach der Erfindung eine deutlich höhere Reibwertgenauigkeit auf.

Eine Reibbaugruppe nach der Erfindung kann gemäß voranstehenden Ausführungen daher auch mit einem Reibbelag 8 gemäß einer der nachfolgenden Ausführungsvarianten versehen sein:
- mit einem Bindemittelfreien, gesinterten Reibbelag (8) mit einem Reibbelagskör-per, der eine metallische Matrix, zumindest einen Abrasivstoff, Festschmierstoffe, und gegebenenfalls zumindest einen Füllstoff umfasst, wobei die Festschmierstoffe durch zumindest zwei unterschiedliche Festschmierstoffe gebildet sind, die ausgewählt sind aus einer Gruppe bestehend aus hexagonales Bornitrid und Metallsulfide mit zumindest einem Metall der Gruppe Wolfram, Eisen, Zinn, Kupfer, Bismut, Antimon, Chrom, Zink, Silber, Mangan, Molybdän. Dieser Reibbelag zeigt eine deutlichere Verbesserung des Reibverhaltens, als dies aufgrund der Offenbarung der EP 2 012 038 A2, in der ja bereits Festschmierstoffe in einem Reibbelag beschrieben worden sind, zu erwarten wäre. Die Verbesserung betrifft vornehmlich die Reduktion von Schwingungen während des Reibschlusses des Reibbelags mit einer Gegenreibfläche, womit in weiterer Folge eine Stabilisierung des Reibverlaufs und damit eine Reduktion des vorzeitigen Verschleißes des Reibbelages erreicht werden kann. Es wird vermutet, dass diese Verbesserung in dem Einsatz von zumindest zwei verschiedenen Festschmierstoffen aus der genannten Gruppe begründet ist. Jeder dieser Festschmierstoffe weist in jeweils spezifischen Betriebsbereichen entsprechend gute Eigenschaften auf. Damit kann der Reibbeleg besser an ein umfassendes Lastkollektiv angepasst werden. Der Reibbelag ist damit besser für den Trockenlauf geeignet, also für Betriebsbedingungen ohne die Abfuhr der entstehenden Reibwärme mit einem Öl. Dies wiederum reduziert auch die Schleppmomente, die aufgrund des Einsatzes von Öl entstehen würden. Damit kann die Reibbaugruppe mit geringerem Abstand der Reibbauteile zueinander gebaut werden, womit die Bauraumgröße der Reibbaugruppe reduziert werden kann.
- mit einem derartigen bindemittelfreien Reibbelag (8), bei dem die Festschmierstoffe durch zumindest zwei Metallsulfide gebildet sind, die das gleiche Metall aufweisen. Es können also Mischsulfide eingesetzt werden, in denen das Metall in zumindest zwei verschiedenen Oxidationsstufen vorliegt. Damit konnte damit das Temperaturverhalten des Reibbelages weiter verbessert werden. Es kann damit aber auch die Materialverträglichkeit der einzelnen Inhaltstoffe der Zusammensetzung des Reibbelags verbessert werden, indem beispielsweise Zinnsulfide als Festschmierstoffe eingesetzt werden, wenn der Reibbelag auch Zinn oder intermetallische Zinnverbindungen enthält.

- mit einem derartigen bindemittelfreien Reibbelag (8), bei dem zusätzlich noch Grafit enthalten ist, womit eine Verbesserung der Temperaturbeständigkeit erreichbar ist.
- mit einem derartigen bindemittelfreien Reibbelag (8), bei dem der Gesamtanteil an Festschmierstoffen an dem Reibbelagskörper ausgewählt ist aus einem Bereich von 5 Gew.-% bis 30 Gew.-%. Mit Anteilen an den Festschmierstoffen in diesem Bereich sind die voranstehend genannten Effekte besonders ausgeprägter.
- mit einem derartigen bindemittelfreien Reibbelag (8), bei dem der Reibbelagskörper Zinnsulfide als Festschmierstoffe enthält, wobei der Gesamtanteil an Zinnsulfiden am Reibbelagskörper zwischen 2 Gew.-% und 7 Gew.-% beträgt;
- 6 mit einem derartigen bindemittelfreien Reibbelag (8), bei dem der Reibbelagskörper Eisensulfide als Festschmierstoffe enthält, wobei der Gesamtanteil an Eisensulfiden am Reibbelagskörper zwischen 1 Gew.-% und 5 Gew.-% beträgt;
- mit einem derartigen bindemittelfreien Reibbelag (8), bei dem der Reibbelagskörper hexagonales Bornitrid als Festschmierstoffe enthält, wobei der Gesamtanteil an hexagonalem Bornitrid am Reibbelagskörper zwischen 1 Gew.-% und 6 Gew.-% beträgt;
- mit einem derartigen bindemittelfreien Reibbelag (8), bei dem der Reibbelagskörper Grafit und hexagonales Bornitrid als Fest-schmierstoffe enthält, wobei ein Verhältnis von Grafit zu hexagonalem Bornitrid ausgewählt ist aus einem Bereich von 3 bis 6;
- mit einem derartigen bindemittelfreien Reibbelag (8), bei dem die Festschmierstoffe teilweise natürlichen Ursprungs und teilweise synthetisch hergestellt sind, wobei ein Verhältnis von natürlichem Festschmierstoff zu synthetischem Festschmierstoff ausgewählt ist aus einem Bereich von 1,5 bis 5;
- mit einem derartigen bindemittelfreien Reibbelag (8), bei dem der Anteil an synthetisch hergestelltem Festschmierstoff am Reibbelagskörper zwischen 0,5 Gew.-% und 5 Gew.-% beträgt;
- mit einem derartigen bindemittelfreien Reibbelag (8), bei dem der Reibbelagskörper SnS und SnS2 als Festschmierstoffe enthält, wobei der Anteil an SnS am Reibbelagskörper zwischen 2 Gew.-% und 6 Gew.-% und der Anteil an SnS₂ am Reibbelagskörper zwischen 1 Gew.-% und 5 Gew.-% beträgt;
- mit einem derartigen bindemittelfreien Reibbelag (8), bei dem der Reibbelagskörper SnS, SnS₂, Sn₂S₃ und hexagonales Bornitrid als Festschmierstoffe enthält, wobei der Anteil an SnS am Reibbelagskörper zwischen 0,5 Gew.-% und 1,5 Gew.-%, der Anteil an SnS₂ am Reibbelagskörper zwischen 1 Gew.-% und 3 Gew.-%, der Anteil an Sn₂S₃ am Reibbelagskörper zwischen 0,5 Gew.-% und 3 Gew.-% und der Anteil an hexagonalem Bornitrid am Reibbelagskörper zwischen 3,5 Gew.-% und 7,5 Gew.-% beträgt;
- mit einem derartigen bindemittelfreien Reibbelag (8), bei dem der Reibbelagskörper SnS und FeS als Festschmierstoffe enthält, wobei der Anteil an SnS am Reibbelagskörper zwischen 6 Gew.-% und 10 Gew.-% und der Anteil an FeS am Reibbelagskörper zwischen 2 Gew.-% und 6 Gew.-% beträgt;
- mit einem derartigen bindemittelfreien Reibbelag (8), bei dem der Reibbelagskörper SnS, FeS und einen synthetischen Festschmierstoff auf Basis von Zinksulfid mit Wolframsulfid und mit Graphit als Festschmierstoffe enthält, wobei der Anteil an SnS am Reibbelagskörper zwischen 1 Gew.-% und 5 Gew.-%, der Anteil an FeS am Reibbelagskörper zwischen 2 Gew.-% und 6 Gew.-% und der Anteil an dem synthetischen Festschmierstoff zwischen 0,5 Gew.-% und 1 Gew.-% beträgt;
- mit einem derartigen bindemittelfreien Reibbelag (8), bei dem der Reibbelagskörper SnS, FeS, hexagonales Bornitrid und einen synthetischen Festschmierstoff auf Basis von Zinksulfid mit Wolframsulfid und mit Graphit als Festschmierstoffe enthält, wobei der Anteil an SnS am Reibbelagskörper zwischen 2 Gew.-% und 6 Gew.-%, der Anteil an FeS am Reibbelagskörper zwischen 1 Gew.-% und 3,5 Gew.-%, der Anteil an hexagonalem Bornitrid am Reibbelagskörper zwischen 0,5 Gew.-% und 4 Gew.-% und der Anteil an dem synthetischen Festschmierstoff zwischen 0,5 Gew.-% und 3 Gew.-% beträgt;
- mit einem derartigen bindemittelfreien Reibbelag (8), bei dem der Reibbelagskörper SnS, hexagonales Bornitrid, Grafit und einen synthetischen Festschmierstoff auf Basis von Zinksulfid mit Wolframsulfid und mit Graphit als Festschmierstoffe enthält, wobei der Anteil an SnS am Reibbelagskörper zwischen 4 Gew.-% und 8 Gew.-%, der Anteil an hexagonalem Bornitrid am Reibbelagskörper zwischen 2 Gew.-% und 6 Gew.-%, der Anteil an Grafit am Reibbelagskörper zwischen 10 Gew.-% und 17 Gew.-% und der Anteil an dem synthetischen Festschmierstoff zwischen 0,5 Gew.-% und 3 Gew.-% beträgt.

In den Fig. 6 bis 8 sind verschiedene Ausführungsvarianten von Gegenlamellen 3 gezeigt, die gegebenenfalls den Gegenstand von eigenständigen Erfindungen bilden können. Weiter sei angemerkt, dass - obwohl nicht dargestellt - auch Kombinationen von voranstehend genannten Merkmalen der Gegenlamelle 3, wie beispielsweise die Oberflächenstrukturierung und/oder Beschichtung der Gegenlamelle 2, möglich sind.

Zudem können alle Gegenlamellen 3 einer Reibbaugruppe gleich oder unterschiedlich ausgebildet sein. Die Nachfolgenden Ausführungen können somit gegebenenfalls auch auf alle Gegenlamellen 3 einer Reibbaugruppe angewandt werden. Es wird daher im Nachfolgenden nur eine Gegenlamelle 3 beschrieben.

Wie aus den Fig. 6 bis 8 ersichtlich ist, kann die Gegenlamelle 3 mit mehreren Durchbrüchen 15 versehen sein, die sich in der Axialrichtung 4 (in Fig. 1 dargestellt) der Reibbaugruppe durch die Gegenlamellen 3 erstrecken. Insbesondere wird diese Ausführung der Gegenlamellen 3 in trockenlaufenden Reibbaugruppen verwendet, also Reibbaugruppen ohne Schmierung/Kühlung mit einer Flüssigkeit. Besonders bevorzugt werden derartige Gegenlamellen 3 in Kombination mit Belaglamellen 2 (In Fig. 1 dargestellt) verwendet, die einen massengepressten Reibbelag 8 aufweisen, wie er voranstehen beschrieben wurde.

Die Gegenlamelle 3 kann beispielsweise zwischen 4 und 60 Durchbrüche 15 aufweisen, wobei diese Angabe nicht beschränkend zu verstehen ist.

Die Durchbrüche 15 sind bevorzugt so angeordnet, dass damit der gesamte Reibbereich der Reiblamelle überdeckt wird, wie dies aus den Fig. 6 bis 8 ersichtlich ist.

In der einfachsten Ausführungsvariante der Gegenlamelle 3 sind alle Durchbrüche 15 auf gleicher radialer Höhe angeordnet, beispielsweise auf einem Kreis, der einen Durchmesser aufweist, der sich durch Di + (Da-Di)/2 ergibt, wobei Da der Außendurchmesser und Di der Innendurchmesser der Reiblamelle bedeuten. Die Durchbrüche 15 können aber auch in einer anderen radialen Höhe angeordnet sein, wobei bevorzugt alle Durchbrüche 15 vollumfänglich geschlossen ausgebildet sind, also nicht in der radial äußern bzw. der radial inneren Mantelfläche der Gegenlamelle 3 enden. Dies trifft bevorzugt auf sämtliche Ausführungsvarianten der Gegenlamelle 3 mit derartigen Durchbrüchen 15 zu.

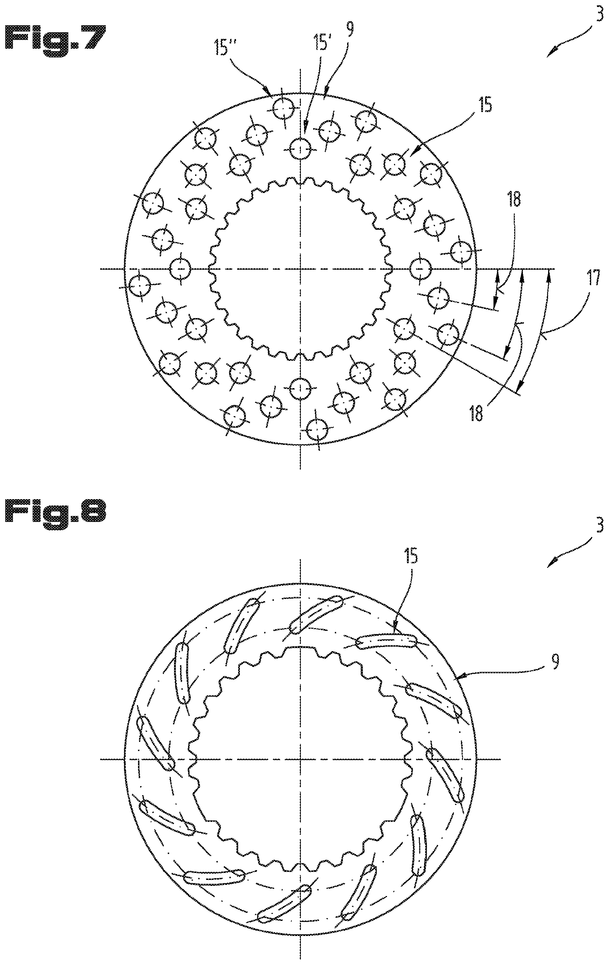

Gemäß einer bevorzugten Ausführungsvariante der Gegenlamelle 3 kann jedoch vorgesehen sein, dass sich die mehreren Durchbrüche 15 auf unterschiedliche radiale Höhen im Lamellenkörper 9 verteilen, wie dies aus den Fig. 6 und 7 ersichtlich ist, also beispielsweise auf zwei verschiedene radiale Höhen (Fig. 6), oder drei verschiedene radiale Höhen (Fig. 7) oder mehr verschiedene radiale Höhen. Dabei sind bevorzugt zwei in Umfangsrichtung unmittelbar nebeneinander angeordnete Durchbrüche 15 auf unterschiedlichen radialen Höhen angeordnet, wie dies aus den Fig. 6 und 7 ersichtlich ist. Es kann also in Umfangsrichtung beispielsweise folgende Abfolge von Durchbrüchen 15 ausgebildet sein: erste radiale Höhe, zweite radiale Höhe, erste radiale Höhe, zweite radiale Höhe, usw., oder erste radiale Höhe, zweite radiale Höhe, dritte radiale Höhe, erste radiale Höhe, zweite radiale Höhe, dritte radiale Höhe, usw..

Bevorzugt sind die durch die unterschiedlichen radialen Höhen definierten Teilkreise der Gegenlamelle 3 konzentrisch zueinander ausgebildet.

Dabei kann gemäß einer Ausführungsvariante der Gegenlamelle 3 auch vorgesehen sein, dass die Durchbrüche in radialer zumindest teilweise übereinander (und beabstandet zueinander) angeordnet sind, wie dies z.B. aus Fig. 7 anhand der Durchbrüche 15' und 15" ersichtlich ist.

Die Durchbrüche 15 können jede geeignete Form aufweisen, beispielsweise oval, viereckig, sechseckig, etc., sein (jeweils in Richtung der Axialrichtung 4 betrachtet). Gemäß einer bevorzugten Ausführungsvariante weisen die Durchbrüche 15 jedoch eine kreisrunde Fläche auf.

Dabei kann nach einer weiteren Ausführungsvariante der Gegenlamelle 3 vorgesehen sein, dass die kreisrunden Flächen jeweils einen Durchmesser 16 aufweisen, der ausgewählt ist aus einem Bereich von 2 mm bis 10 mm, insbesondere aus einem Bereich von 4 mm bis 7 mm.

Wie die Fig. 8 zeigt, können die Durchbrüche 15 auch die Form eines Langloches aufweisen. Die Langlöcher können dabei gerade oder oval ausgeführt sein. Bevorzugt sind sie jedoch gemäß einer Ausführungsvariante bogenförmig, also mit bogenförmig gekrümmtem Verlauf ausgebildet, wie dies die Fig. 8 zeigt. Die Krümmung ist dabei bevorzugt derart ausgebildet, dass die Langlöcher von innen nach außen in Drehrichtung der Gegenlamelle 3 mit einer konkaven Krümmung verlaufen.

Es ist auch bei den nicht als Langlöcher ausgebildeten Durchbrüchen 15 möglich, diese auf einem Bogen liegend anzuordnen, wie dies beispielsweise aus Fig. 7 ersichtlich ist, in der jeweils drei Durchbrüche 15 auf einer Bogenbahn liegen (beginnend von einem inneren Durchbruch 15).

Es ist weiter möglich, dass die Durchbrüche 15, die auf gleicher radialer Höhe angeordnet sind, jeweils um einen Winkel 17 (in Fig. 7 dargestellt) versetzt angeordnet sind, der ausgewählt ist aus einem Bereich von 20 ° bis 60 °, insbesondere aus einem Bereich von 25 ° bis 45 °.

Weiter kann vorgesehen sein, dass die Durchbrüche, die auf unterschiedlicher radialer Höhe angeordnet sind, jeweils um einen Winkel 18 (in Fig. 7 dargestellt) versetzt angeordnet sind, der ausgewählt ist aus einem Bereich von 5 ° bis 25 °, insbesondere aus einem Bereich von 8 ° und 22 °.

Die Winkel 17 und 18 werden dabei jeweils zwischen den Mittelpunkten der Durchbrüche 15 gemessen.

Weiter wird der Winkel 18 zwischen Durchbrüchen 15 bestimmt, die auf unmittelbar übereinanderliegenden radialen Höhen liegen.

Sämtliche Durchbrüche 15 einer Gegenlamelle 3 können die gleiche Form und/oder Größe aufweisen. Es ist aber auch möglich, dass die Durchbrüche 15 einer Gegenlamelle 3 unterschiedlich ausgebildet sind, beispielsweise eine unterschiedliche Form und/oder unterschiedliche Größe aufweisen. So kann beispielsweise vorgesehen sein, dass die radial innersten Durchbrüche 15 am kleinsten sind, und dass die Größe der Durbrüche 15 in radialer Richtung von innen nach außen zunimmt.

Es kann weiter vorgesehen, dass Übergänge zwischen der axialen Oberfläche der Gegenlamelle 3 und den Durchbrüchen 15 abgeschrägt oder gerundet sind, um damit die Aufnahme von Abriebpartikel in den Durchbrüchen 15 zu verbessern.

Die Ausführungsbeispiele zeigen bzw. beschreiben mögliche Ausführungsvarianten, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus der Reibbaugruppe bzw. des Lamellenpakets 1 und der Lamellen diese nicht zwingenderweise maßstäblich dargestellt wurden.

Die Gegenlamelle 3 mit den Durchbrüchen 15 kann Gegenstand einer eigenständigen Erfindung sein, die eine trockenlaufende Reibbaugruppe an sich betrifft.

### Bezugszeichenaufstellung

- 1: Lamellenpaket
- 2: Belaglamelle
- 3: Gegenlamelle
- 4: Axialrichtung
- 5: Trägerlamelle
- 6: Oberfläche
- 7: Oberfläche
- 8: Reibbelag
- 9: Lamellenkörper
- 10: Mitnehmerelement
- 11: Mitnehmerelement
- 12: Segment
- 13: Abstand
- 14: Breite
- 15: Durchbruch
- 16: Durchmesser
- 17: Winkel
- 18: Winkel

## Patentansprüche

1. Reibbaugruppe umfassend ein trockenlaufendes Lamellenpaket (1) mit zumindest einer Belaglamelle (2) und zumindest einer Gegenlamelle (3), die in einer Axialrichtung (4) des Lamellenpakets (1) abwechselnd hintereinander angeordnet und die in Reibschluss miteinander verbringbar sind, wobei die Belaglamelle (2) zumindest einen Trockenlaufreibbelag aufweist, der ein massegepresster Reibbelag (8) ist, und der eine Porosität aufweist, die größer als 10 % ist, **dadurch gekennzeichnet, dass** die Gegenlamelle (3) aus Stahl oder einer eisenbasierten Legierung besteht, und dass eine Oberfläche der Gegenlamelle (3) strukturiert und/oder mit einer Beschichtung versehen ist und/oder dass die Gegenlamelle (3) im Lamellenkörper (9) mehrere Durchbrüche (15) aufweist.

2. Reibbaugruppe nach Anspruch 1, **dadurch gekennzeichnet, dass** der Reibbelag (8) eine Presssinterreibbelag ist.

3. Reibbaugruppe nach Anspruch 2, **dadurch gekennzeichnet, dass** der Presssinterreibbelag ein Sintermetallbelag oder ein, einen organischen Werkstoff aufweisender Presssinterreibbelag ist.

4. Reibbaugruppe nach einem der Ansprüche 1 bis 3, **dadurch gekennzeichnet, dass** der Reibbelag (8) auf einer Trägerlamelle (5) angeordnet ist.

5. Reibbaugruppe nach Anspruch 4, **dadurch gekennzeichnet, dass** der Reibbelag (8) mit der Trägerlamelle (5) über eine Verbindungsschicht verbunden ist.

6. Reibbaugruppe nach einem der Ansprüche 1 bis 5, **dadurch gekennzeichnet, dass** der Reibbelag (8) segmentiert ist.

7. Reibbaugruppe nach einem der Ansprüche 1 bis 6, **dadurch gekennzeichnet, dass** eine Oberfläche des Reibbelags (8) strukturiert und/oder mit einer Beschichtung versehen ist.

8. Reibbaugruppe nach einem der Ansprüche 1 bis 7, **dadurch gekennzeichnet, dass** die Beschichtung der Gegenlamelle (3) aus aufgeschmolzenen Metalloxiden aus der Gruppe Al, Mg, Fe, Si oder Ti oder organische Beschichtungen mit Füllstoffen aus Al, Mg, Fe, Si, Ti oder Carbiden, hergestellt ist oder auf Basis von Cu oder Cu-Legierungen ausgeführt ist.

9. Reibbaugruppe nach einem der Ansprüche 1 bis 8, **dadurch gekennzeichnet, dass** der Reibbelag (8) zumindest einen Abrasivstoff aufweist, wobei der Anteil des Abrasivstoffes an dem Reibbelag maximal 5 Gew.-% beträgt.

10. Reibbaugruppe nach einem der Ansprüche 1 bis 9, **dadurch gekennzeichnet, dass** die Porosität des Reibbelages (8) aus einem Bereich mit einer unteren Grenze von 15 % und einer oberen Grenze von 40 % ausgewählt ist.

11. Reibbaugruppe nach einem der Ansprüche 1 bis 10, **dadurch gekennzeichnet, dass** der Reibbelag (8) eine metallische Matrix aufweist und dass der Anteil der metallischen Matrix am Reibbelag (8) ausgewählt ist aus einem Bereich mit einer unteren Grenze von 60 Gew.-% und einer oberen Grenze von 90 Gew.-%.

12. Reibbaugruppe nach Anspruch 11, **dadurch gekennzeichnet, dass** die metallische Matrix aus zumindest einem Element aus einer Gruppe umfassend Kupfer, Eisen, Zinn, Zink, oder Legierungen und Mischungen daraus gebildet ist.

13. Reibbaugruppe nach einem der Ansprüche 1 bis 12, **dadurch gekennzeichnet, dass** der Reibbelag (8) zumindest einen vom Abrasivstoff verschiedenen Füllstoff aufweist und dass der Anteil des zumindest einen Füllstoffes am Reibbelag (8) ausgewählt ist aus einem Bereich mit einer unteren Grenze von 5 Gew.-% und einer oberen Grenze von 35 Gew.-%.

14. Reibbaugruppe nach Anspruch 13, **dadurch gekennzeichnet, dass** der zumindest eine Füllstoff ein silikatischer Füllstoff ist.

15. Reibbaugruppe nach Anspruch 14, **dadurch gekennzeichnet, dass** der zumindest eine Füllstoff ausgewählt ist aus einer Gruppe umfassend Glimmer, Feldspat, Kieselgur oder Mischungen daraus.

16. Reibbaugruppe nach einem der Ansprüche 9 bis 15, **dadurch gekennzeichnet, dass** der zumindest eine Abrasivstoff ausgewählt ist aus einer Gruppe umfassend Mullit, Siliziumdioxid, Korund, Glas, Aluminiumoxid, sowie Mischungen daraus.

17. Reibbaugruppe nach einem der Ansprüche 1 bis 16, **dadurch gekennzeichnet, dass** in dem Reibbelag (8) zumindest ein Festschmierstoff enthalten ist, der ausgewählt ist aus einer Gruppe umfassend Grafit, Molybdändisulfid, Koks, sowie Mischungen daraus.

18. Reibbaugruppe nach Anspruch 17, **dadurch gekennzeichnet, dass** der Anteil des Festschmierstoffes am Reibbelag (8) ausgewählt ist aus einem Bereich mit einer unteren Grenze von 2 Gew.-% und einer oberen Grenze von 30 Gew.-%.

19. Reibbaugruppe nach einem der Ansprüche 1 bis 18, **dadurch gekennzeichnet, dass** diese eine Kupplung oder Bremse ist.

20. Reibbaugruppe nach Anspruch 1 bis 19, **dadurch gekennzeichnet, dass** die Durchbrüche (15) im Lamellenkörper (9) der Gegenlamelle (3) auf unterschiedlicher radialer Höhe angeordnet sind.

21. Reibbaugruppe nach Anspruch 1 bis 20, **dadurch gekennzeichnet, dass** die Durchbrüche (15) mit kreisrunder Fläche ausgebildet sind.

22. Reibbaugruppe nach Anspruch 21, **dadurch gekennzeichnet, dass** die kreisrunden Flächen jeweils einen Durchmesser (16) aufweisen, der ausgewählt ist aus einem Bereich von 2 mm bis 10 mm.

23. Reibbaugruppe nach einem der Ansprüche 1 bis 20, **dadurch gekennzeichnet, dass** die Durchbrüche (15) als Langlöcher ausgebildet sind.

24. Reibbaugruppe nach Anspruch 23, **dadurch gekennzeichnet, dass** die Länglöcher einen bogenförmigen Verlauf aufweisen.

25. Reibbaugruppe nach einem der Ansprüche 1 bis 24, **dadurch gekennzeichnet, dass** die Durchbrüche (15) in radialer zumindest teilweise übereinander angeordnet sind.

26. Reibbaugruppe nach einem der Ansprüche 1 bis 25, **dadurch gekennzeichnet, dass** die Durchbrüche (15), die auf gleicher radialer Höhe angeordnet sind, jeweils um einen Winkel (17) versetzt angeordnet sind, der ausgewählt ist aus einem Bereich von 20 ° bis 60°.

27. Reibbaugruppe nach einem der Ansprüche 1 bis 26, **dadurch gekennzeichnet, dass** die Durchbrüche (15), die auf unterschiedlicher radialer Höhe angeordnet sind, jeweils um einen Winkel (18) versetzt angeordnet sind, der ausgewählt ist aus einem Bereich von 5 ° bis 25 °.

28. Verwendung der Reibbaugruppe nach einem der Ansprüche 1 bis 27 in einer Kupplung oder einer Bremse oder einem Synchronisationsgetriebe eines AWD-Antriebes oder FWD-Antriebes.

## Claims

1. A friction assembly comprising a dry-running disc pack (1) with at least one lining disc (2) and at least one counter disc (3), which are arranged one behind the other in an alternating manner in an axial direction (4) of the disc pack (1), and which can be brought into frictional contact with one another, wherein the lining disc (2) has at least one dry-running friction lining, which is a mass-pressed friction lining (8), and which has a porosity which is greater than 10%, **characterized in that** the counter disc (3) consists of steel or an iron-based alloy, and that a surface of the counter disc (3) is structured and/or provided with a coating and/or that the counter disc (3) has a plurality of openings (15) in the disc body (9).

2. The friction assembly according to claim 1, **characterized in that** the friction lining (8) is a press sintered friction lining.

3. The friction assembly according to claim 2, **characterized in that** the press sintered friction lining is a sintered metal lining or a press sintered friction lining comprising an organic material.

4. The friction assembly according to one of claims 1 to 3, **characterized in that** the friction lining (8) is arranged on a carrier disc (5).

5. The friction assembly according to claim 4, **characterized in that** the friction lining (8) is connected to the carrier disc (5) via a connecting layer.

6. The friction assembly according to one of claims 1 to 5, **characterized in that** the friction lining (8) is segmented.

7. The friction assembly according to one of claims 1 to 6, **characterized in that** a surface of the friction lining (8) is structured and/or provided with a coating.

8. The friction assembly according to one of claims 1 to 7, **characterized in that** the coating of the counter disc (3) is made of fused-on metal oxides from the group Al, Mg, Fe, Si or Ti or organic coatings with filling materials made of Al, Mg, Fe, Si, Ti or carbides, or is based on Cu or Cu alloys.

9. The friction assembly according to one of claims 1 to 8, **characterized in that** the friction lining (8) comprises at least one abrasive, wherein the proportion of the abrasive in the friction lining amounts to a maximum of 5 wt.%.

10. The friction assembly according to one of claims 1 to 9, characterized that the porosity of the friction lining (8) is selected from a range having a lower limit of 15% and an upper limit of 40%.

11. The friction assembly according to one of claims 1 to 10, **characterized in that** the friction lining (8) comprises a metallic matrix, and that the proportion of the metallic matrix in the friction lining (8) is selected from a range having a lower limit of 60 wt.% and an upper limit of 90 wt.%.

12. The friction assembly according to claim 11, **characterized in that** the metallic matrix is formed from at least one element from a group comprising copper, iron, tin, zinc, or alloy and mixtures thereof.

13. The friction assembly according to one of claims 1 to 12, **characterized in that** the friction assembly (8) comprises at least one filling material that is different from the abrasive, and that the proportion of the at least one filling material in the friction lining (8) is selected from a range having a lower limit of 5 wt.% and an upper limit of 35 wt.%.

14. The friction assembly according to claim 13, **characterized in that** the at least one filling material is a silicate filling material.

15. The friction assembly according to claim 14, **characterized in that** the at least one filling material is selected from a group comprising mica, feldspar, kieselguhr, or mixtures thereof.

16. The friction assembly according to one of claims 9 to 15, **characterized in that** the at least one abrasive is selected from a group comprising mullite, silicon dioxide, corundum, glass, aluminum oxide, as well as mixtures thereof.

17. The friction assembly according to one of claims 1 to 16, **characterized in that** at least one solid lubricant is contained in the friction lining (8), which solid lubricant is selected from a group comprising graphite, molybdenum disulfide, coke, as well as mixtures thereof.

18. The friction assembly according to claim 17, **characterized in that** the proportion of the solid lubricant in the friction lining (8) is selected from a range having a lower limit of 2 wt.% and an upper limit of 30 wt.%.

19. The friction assembly according to one of claims 1 to 18, **characterized in that** it is a clutch or brake.

20. The friction assembly according to claim 1 to 19, **characterized in that** the openings (15) in the disc body (9) of the counter disc (3) are arranged at different radial heights.

21. The friction assembly according to claim 1 to 20, **characterized in that** the openings (15) are formed having a circular surface.

22. The friction assembly according to claim 21, **characterized in that** the circular surfaces each have a diameter (16) selected from a range of 2 mm to 10 mm.

23. The friction assembly according to one of claims 1 to 20, **characterized in that** the openings (15) are formed as elongated holes.

24. The friction assembly according to claim 23, **characterized in that** the elongated holes have an arcuate course.

25. The friction assembly according to one of claims 1 to 24, **characterized in that** the openings (15) are at least partially arranged on top of one another in the radial.

26. The friction assembly according to one of claims 1 to 25, **characterized in that** the openings (15), which are arranged at the same radial height, are in each case offset by an angle (17) selected from a range of 20° to 60°.

27. The friction assembly according to one of claims 1 to 26, **characterized in that** the openings (15), which are arranged at different radial heights, are in each case offset by an angle (18) selected from a range of 5° to 25°.

28. A use of the friction assembly according to one of claims 1 to 27 in a clutch or a brake or in a synchromesh transmission of an AWD drive or FWD drive.

## Revendications

1. Assemblage à friction comprenant un ensemble de lamelles fonctionnant à sec (1) avec au moins une lamelle de garniture (2) et au moins une contre-lamelle (3), qui sont disposées l'une derrière l'autre de manière alternée dans une direction axiale (4) de l'ensemble de lamelles (1) et qui peuvent être mises en contact à friction entre elles, dans lequel la lamelle de garniture (2) présente au moins une garniture de friction à sec qui est une garniture de friction pressée dans la masse (8) et qui présente une porosité qui est supérieure à 10 %, **caractérisé en ce que** la contre-lamelle (3) est constituée d'acier ou d'un alliage à base de fer et **en ce qu'**une surface de la contre-lamelle (3) est texturée et/ou est munie d'un revêtement et/ou **en ce que** la contre-lamelle (3) comprend, dans le corps de lamelle (9), plusieurs percées (15).

2. Assemblage à friction selon la revendication 1, **caractérisé en ce que** la garniture de friction (8) est une garniture de friction frittée.

3. Assemblage à friction selon la revendication 2, **caractérisé en ce que** la garniture de friction frittée est une garniture métallique frittée ou une garniture de friction frittée comprenant un matériau organique.

4. Assemblage à friction selon l'une des revendications 1 à 3, **caractérisé en ce que** la garniture de friction (8) est disposée sur une lamelle de support (5).

5. Assemblage à friction selon la revendication 4, **caractérisé en ce que** la garniture de friction (8) est reliée avec la lamelle de support (5) par l'intermédiaire d'une couche de liaison.

6. Assemblage à friction selon l'une des revendications 1 à 5, **caractérisé en ce que** la garniture de friction (8) est segmentée.

7. Assemblage à friction selon l'une des revendications 1 à 6, **caractérisé en ce qu'**une surface de la garniture de friction (8) est texturée et/ou munie d'un revêtement.

8. Assemblage à friction selon l'une des revendications 1 à 7, **caractérisé en ce que** le revêtement de la contre-lamelle (3) est constitué d'oxydes métalliques fondus sélectionnés dans le groupe : Al, Mg, Fe, Si ou Ti ou de revêtements organiques avec des charges de Al, Mg, Fe, Si, Ti ou de carbures, ou est réalisé à base de Cu ou d'alliages de Cu.

9. Assemblage à friction selon l'une des revendications 1 à 8, **caractérisé en ce que** la garniture de friction (8) comprend au moins une substance abrasive, dans lequel la part de la substance abrasive dans la garniture de friction représente au maximum 5 % en poids.

10. Assemblage à friction selon l'une des revendications 1 à 9, **caractérisé en ce que** la porosité de la garniture de friction (8) est choisie dans une plage avec une limite inférieure de 15 % et une limite supérieure de 40 %.

11. Assemblage à friction selon l'une des revendications 1 à 10, **caractérisé en ce que** la garniture de friction (8) comprend une matrice métallique et **en ce que** la part de la matrice métallique dans la garniture de friction (8) est choisie dans une plage avec une limite inférieure de 60 % et une limite supérieure de 90 %.

12. Assemblage à friction selon la revendication 11, **caractérisé en ce que** la matrice métallique est constituée d'au moins un élément du groupe comprenant le cuivre, le fer, l'étain, le zinc ou des alliages et des mélanges de ceux-ci.

13. Assemblage à friction selon l'une des revendications 1 à 12, **caractérisé en ce que** la garniture de friction (8) comprend au moins une charge différente de la substance abrasive et **en ce que** la part de l'au moins une charge dans la garniture de friction (8) est choisie dans une plage avec une limite inférieure de 5 % et une limite supérieure de 35 %.

14. Assemblage à friction selon la revendication 13, **caractérisé en ce que** l'au moins une charge est une charge de silicate.

15. Assemblage à friction selon la revendication 14, **caractérisé en ce que** l'au moins une charge est sélectionnée dans un groupe comprenant : mica, feldspath, terre de diatomées ou de mélanges de ceux-ci.

16. Assemblage à friction selon l'une des revendications 9 à 15, **caractérisé en ce que** l'au moins une substance abrasive est sélectionnée dans un groupe comprenant : mullite, dioxyde de silicium, corindon, verre, oxyde d'aluminium, ainsi que des mélanges de ceux-ci.

17. Assemblage à friction selon l'une des revendications 1 à 16, **caractérisé en ce que**, dans la garniture de friction (8), est contenu au moins un lubrifiant solide qui est sélectionné dans un groupe comprenant : graphite, disulfure de molybdène, coke ainsi que des mélanges de ceux-ci.

18. Assemblage à friction selon la revendication 17, **caractérisé en ce que** la part de lubrifiant solide dans la garniture de friction (8) est choisie dans une plage avec une limite inférieure de 2 % et une limite supérieure de 30 %.

19. Assemblage à friction selon l'une des revendications 1 à 18, **caractérisé en ce que** celui-ci est un embrayage ou un frein.

20. Assemblage à friction selon l'une des revendications 1 à 19, **caractérisé en ce que** les percées (15) dans le corps de lamelle (9) de la contre-lamelle (3) sont disposées à des hauteurs radiales différentes.

21. Assemblage à friction selon l'une des revendications 1 à 20, **caractérisé en ce que** les percées (15) sont réalisées avec des surfaces circulaires.

22. Assemblage à friction selon la revendication 21, **caractérisé en ce que** les surfaces circulaires présentent chacune un diamètre (16) qui est choisi dans une plage de 2 mm à 10 mm.

23. Assemblage à friction selon l'une des revendications 1 à 20, **caractérisé en ce que** les percées (15) sont réalisées sous la forme de trous oblongs.

24. Assemblage à friction selon la revendication 23, **caractérisé en ce que** les trous oblongs présentent un contour en forme d'arc.

25. Assemblage à friction selon l'une des revendications 1 à 24, **caractérisé en ce que** les percées (15) sont disposées de manière au moins partiellement superposée dans la direction radiale.

26. Assemblage à friction selon l'une des revendications 1 à 25, **caractérisé en ce que** les percées (15) qui sont disposées à la même hauteur radiale, sont disposées de manière décalée respectivement d'un angle (17) qui est choisi dans une plage de 20° à 60°.

27. Assemblage à friction selon l'une des revendications 1 à 26, **caractérisé en ce que** les percées (15) qui sont disposées à des hauteurs radiales différentes, sont disposées de manière décalée respectivement d'un angle (18) qui est choisi dans une plage de 5° à 25°.

28. Utilisation de l'assemblage à friction selon l'une des revendications 1 à 27 dans un embrayage ou un frein ou une transmission de synchronisation d'un entraînement AWD ou FWD.
